# EUROPÄISCHE PATENTSCHRIFT

(11) **EP 0 664 759 B1**
(45) Veröffentlichungstag und Bekanntmachung des Hinweises auf die Patenterteilung: **03.11.1999**
(21) Anmeldenummer: 94924731.6
(22) Anmeldetag: 10.07.1994
(51) Int. Cl.: B65D 5/74, B31B 1/84, B65D 47/06

(54) **VERFAHREN ZUR HERSTELLUNG EINER FLIESSMITTELVERPACKUNG UND WERKZEUG ZUR DURCHFÜHRUNG DES VERFAHRENS**
PROCESS FOR MANUFACTURING PACKAGE FOR FLUID SUBSTANCES AND TOOL FOR CARRYING OUT THE PROCESS
PROCEDE DE FABRICATION D'UN EMBALLAGE POUR SUBSTANCES LIQUIDES ET OUTIL DE MISE EN UVRE DUDIT PROCEDE

(30) Priorität: 31.07.1993 DE 4325830
(43) Veröffentlichungstag der Anmeldung: 02.08.1995
(60) Teilanmeldung: 97111503.5
(73) Patentinhaber: Tetra Laval Holdings & Finance SA, 1009 Pully (CH)
(72) Erfinder: HUSER, Pierre, Aurora, Ontario L4G 3G8 (CA)
(74) Vertreter: Weber, Dieter, Dr.
(86) Internationale Anmeldenummer: EP9402255
(87) Internationale Veröffentlichungsnummer: WO9503976

(56) Entgegenhaltungen:
- EP-A- 0 342 729
- WO-A-92/00883
- WO-A-93/10967
- DE-A- 4 100 542
- US-A- 5 102 485

## Beschreibung

Die Erfindung betrifft ein Verfahren zur Herstellung einer Verpackung für Fließmittel mit wenigstens einem im wesentlichen ebenen Oberwandteilstück aus mit Kunststoff beschichtetem Trägermaterial, zum Beispiel Karton, in welchem eine Ausgießvorrichtung angebracht ist, die ein wenigstens ein Loch enthaltendes Unterteil und einen scharnierartig mit diesem verbundenen, wenigstens eine Verschließkappe enthaltenden Deckel aufweist. Ferner bezieht sich die Erfindung auf ein Werkzeug zur Durchführung dieses Verfahrens.

Bekannt ist die Herstellung von Verpackungen aus Verbundmaterial, beispielsweise aus mit Kunststoff beschichtetem Karton als Trägermaterial. Solche Verpackungen werden in leistungsstarken Maschinen hergestellt, in denen die Bahn des Verbundmaterials von einer Rolle gezogen, vorgerillt und gegebenenfalls vorgestanzt und dann zu einem Tubus geformt wird, der an seinen Längskanten durch eine Längssiegelnaht geschlossen wird. In diesen Schlauch wird das spätere Füllgut eingefüllt, und durch Quersiegeln werden die einzelnen gefüllten Packungen vom Schlauch separiert und geformt, so daß sich letztlich quaderförmige Packungen ergeben. Diese haben am Boden und in der Oberwand Quersiegelnähte, die zur Bildung von ebenen Böden und ebenen Oberwänden heruntergefaltet und so umgelegt werden, daß seitlich dreieckförmige Lappen herausstehen, welche z. B. auf die Seitenwand umgelegt und dort verschweißt werden.

Eine auf diese Weise hergestellte Flüssigkeitspackung hat daher eine aus drei Teilstücken gebildete Oberwand, in der z. B. in der Mitte die ebenfalls flach umgelegte Längssiegelnaht die Quersiegelnaht kreuzt.

Zahlreiche Öffnungsvorrichtungen sind an solchen Packungen entwickelt und veröffentlicht worden. Es gibt Öffnungsvorrichtungen, die aus dem Bahnmaterial gebildet werden, z. B. durch Perforations- und Reißlinien, wobei diese zwar mehr oder weniger gut geöffnet, nicht aber ohne weiteres wiederverschlossen werden können, im allgemeinen nicht staubdicht und fast niemals flüssigkeitsdicht wiederverschlossen werden können. Es gibt auch andere Ausgießvorrichtungen, die durch Aufsiegeln von Aufreißstreifen gebildet werden, welche ein im Bahnmaterial der Verpackung ausgestanztes Loch überspannen und verschließen. Bei wieder anderen Vorrichtungen werden von der Innenseite Abdeckstreifen aufgesiegelt, so daß der äußere Aufreißstreifen durch das Loch hindurch mit diesem inneren Abdeckstreifen versiegelt ist. Beim Hochreißen des äußeren Streifens reißt dieser den inneren Abdeckstreifen im Bereich des in der Papierbahn ausgestanzten Loches auf. Zahlreiche bekannte Aufreißstreifen werden beim erstmaligen Öffnen der Verpackung abgerissen und bilden Abfall. Bei anderen Aufreißstreifen hat man diese einseitig so angesiegelt, daß sie nach dem Öffnen des Loches an der Verpackung hängenbleiben. Bei keiner dieser bekannten Ausgieß- und Öffnungsvorrichtungen war ein Wiederverschließen in staubdichter oder gar flüssigkeitsdichter Form möglich.

Während andere Ausgießvorrichtungen durch Spritzgießen von thermoplastischen Kunststoffen hergestellt und an Löchern von Verpackungen angebracht werden, die auch wiederverschlossen werden können, hat sich dort gezeigt, daß entweder die Herstellung oder die Anbringung solcher Ausgießvorrichtungen Probleme bereitet oder sehr aufwendig ist.

Bei einem bekannten Verfahren nach der EP-A-0.342.729 soll in einem Oberwandteilstück eine Ausgießvorrichtung angebracht werden, die ein Loch und eine Kappe aufweist. Der Fachmann erhält keine Anregungen, wie die zugehörige Verpackung aussehen oder hergestellt werden soll. Er bezieht bei seinen Überlegungen gleichwertige Verfahren ein, bei welchen ein Karton aus einem Zuschnitt hergestellt wird. Das Loch in der Oberwand ist für den Fachmann bereits vorhanden. Er liest nicht, wann und wie er dieses erstellen soll.

Hätte der Fachmann eine Ausgießvorrichtung mit einem aus der Oberwand nach oben herausstehenden Kragen anzubringen, so würde er die Lehre nach dem bekannten Verfahren nicht anwenden. Der hochstehende Kragen trägt nämlich derart auf, daß eine Weiterführung oder gar Zwischenlagerung einer Bahn, die mit einer solchen Ausgießvorrichtung versehen wäre, nicht problemlos möglich wäre.

Auch das Unterteil der Ausgießvorrichtung sieht bei den Ausführungsbeispielen des bekannten Verfahrens derart anders aus, und es wird auch von Giebelverpackungen gesprochen, daß die Herstellung einer Verpackung im Sinne der vorliegenden Erfindung nicht als angeregt anzusehen ist.

Ähnliches gilt auch für das Werkzeug zur Durchführung des Verfahrens.

Weiterhin ist aus der US-A-5, 102,485 ein Verfahren bekannt, bei welchem eine Ausgießvorrichtung verarbeitet wird, die ein dreiteiliges Stück aus einer flachen Bahn ist und daher nicht besonders aufträgt. Die damit zusammenhängenden Probleme einerseits und Vorteile andererseits werden bei diesem bekannten Verfahren nicht erwähnt. Zusätzlich zu diesem Problem der auftragenden Dicke erkennt der Fachmann auch, daß bei dem zuletzt erwähnten bekannten Verfahren eine fortlaufende Bahn nicht mit einer auftragenden Ausgießvorrichtung versehen und dann weiter verarbeitet werden kann. Bei dem bekannten Verfahren sind die abgeförderten Zuschnitte mit doppelt gefalteten Vorrichtungen das Endergebnis. In der Fläche des Kartonzuschnittes wird durch eine Linie ein Klebefeld angedeutet, auf welches die Ausgießvorrichtung an dem Kartonzuschnitt angebracht wird.

Aufgabe der vorliegenden Erfindung ist es daher, ein Verfahren zur Herstellung einer Verpackung der eingangs genannten Art zu schaffen, durch welches die Verpackung mit einer verbesserten Ausgießöffnung technisch einfach und wirtschaftlich herstellbar ist, wobei der Endverbraucher die Verpackung leicht öffnen und so wieder verschließen kann, daß sie sogar flüssigkeitsdicht ist.

Diese Aufgabe wird erfindungsgemäß dadurch gelöst, daß eine Bahn aus Verbundmaterial, das gegebenenfalls für die Innenseite der Verpackung eine Aluminiumbeschichtung enthält, nach dem Rillen zur Bildung des wenigstens einen Loches im Oberwandteilstuck gestanzt wird, dann eine Ausgießvorrichtung aus thermoplastischem Kunststoff mit einem außen vom Unterteil hochstehenden Kragen an dem ausgestanzten Loch angelegt und in der nächsten Stufe angeschweißt wird, wonach die Bahn zum Schlauch geformt, gefüllt und verschweißt wird.

Mit diesem Verfahren gemäß der Erfindung ist es möglich, herkömmliche Verpackungsmaschinen zu benutzen und in herkömmlicher Weise Verpackungen von einer Bahn von Verbundmaterial zu produzieren, ohne daß die Maschine außer in einer Vorschaltstufe geändert werden muß. Mit im Handel erhältlichen Maschinen können auf diese Weise 6.000 Ausgießvorrichtungen oder mehr pro Stunde an ausgestanzten Löchern einer Papierbahn angebracht werden, wonach die Bahn mit entsprechender Leistung weiter betrieben werden kann. Hier kann man nach zwei Alternativen verfahren, z. B. der ersten Alternative, wonach in drei verschiedenen Stufen erst gestanzt, dann die Ausgießvorrichtung am gestanzten Loch angebracht und danach in der dritten Stufe die Ausgießvorrichtung angeschweißt wird. Die andere alternative Möglichkeit verläuft nach zwei Verfahrensschritten, nämlich im ersten Schritt das Ausstanzen des Loches in der Bahn; und im zweiten Verfahrensschritt das Anbringen und gleichzeitige Versiegeln der Ausgießvorrichtung an dem ausgestanzten Loch. Die letzte Alternative mit den nur zwei Schritten erfordert weniger Wartung, setzt aber eine etwas aufwendigere Vorstufe in der Verpackungsmaschine voraus. Gleichwohl können bereits vorhandene Technologien und Maschinen verwendet werden. Vorzugsweise ist der Deckel mit dem Unterteil scharnierartig verbunden.

Günstig ist es erfindungsgemäß ferner, wenn bei mit Aluminium beschichtetem Verbundmaterial der Bahn diese mittels Induktion erwärmt und mit der Ausgießvorrichtung verbunden wird. Es ist bekannt, gewisse flüssige Lebensmittel in quaderförmigen Packungen aus Verbundmaterial unterzubringen und gegen äußere Einflüsse durch eine Aluminiumbeschichtung zu schützen, die vorzugsweise auf der Innenseite der Verpackung angebracht wird. Verwendet man diese Art von Verbundmaterial, dann kann die Wärme zum Anschweißen der Ausgießvorrichtung mittels Induktion erzeugt werden.

Das Werkzeug zur Durchführung des Verfahrens der vorstehend beschriebenen Art nach der Erfindung, insbesondere zum Befestigen der Ausgießvorrichtung an dem Oberwandteilstück, mit relativ zueinander bewegbaren Heiz- und Gegenbacken, ist dadurch gekennzeichnet, daß ein das Loch in dem Oberwandteilstück übergreifender Heizbacken auf der späteren Innenseite der Bahn bewegbar vorgesehen und mit einem mittigen Vorsprung mit einem Durchmesser versehen ist, der etwa dem Innendurchmesser der Dichtlippe an der Verschließkappe entspricht, wobei der Innendurchmesser der Dichtlippe etwa gleich dem Innendurchmesser des Loches in dem Verbindungssteg der Ausgießvorrichtung ist, daß der Vorsprung eine Höhe hat, die etwas größer ist als die Dicke des Materials des Oberwandteilstückes und daß in der zurückgesetzten Schulterfläche des Heizbackens eine den Vorsprung umgebende Induktionsheizspule angeordnet ist. Der Heizbacken mit dem Vorsprung stellt bei dieser bevorzugten Ausführungsform eine Art Nietwerkzeug dar, denn der Bereich vom Vorsprung zur Oberfläche des Heizbackens, welche eine schulterartige Fläche ist, wird vorzugsweise gerundet und gleichmäßig derart sein, daß durch die Bewegung des Heizbackens auf die gehaltene Ausgießvorrichtung zu der vorstehend erwähnte Befestigungsrand erfaßt und wie für eine nietenartige Befestigung unter die Ränder des Loches im Verbundmaterial gebogen werden. Auf engstem Raum kann das Werkzeug damit Induktionsspulen oder Heizspulen erhalten, so daß die Ränder des Verbundmaterials neben dessen ausgestanztem Loch gut und durchgreifend erwärmt werden können, so daß die Befestigung der Ausgießvorrichtung aus Kunststoff durch Schweißen am Verbundmaterial mit Sicherheit und zuverlässig gewährleistet ist.

Die Ausgießvorrichtung weist ein wenigstens ein Loch enthaltendes Unterteil und einen scharnierartig mit diesem verbundenen, wenigstens eine Verschließkappe enthaltenden Deckel auf, ein Kragen kann das Loch außen umgeben, die Verschließkappe kann eine mit dem Kragen in Eingriff bringbare Dichtlippe aufweisen und auf der dem Kragen gegenüberliegenden Innenseite des Unterteils kann ein durch ein entsprechendes Loch in dem Oberwandteilstück zur Innenseite der Verpackung hindurchragender Bund angebracht sein, wobei vorzugsweise das Unterteil auf der Außen- und/oder auf der Innenfläche des Oberwandteilstückes angeschweißt ist.

Wenngleich das Loch im Unterteil der Ausgießvorrichtung und gegebenenfalls auch das entsprechende Loch in dem Oberwandteilstück vieleckig, tropfenförmig, oval, länglich oder kreisrund sein kann, wird zur vereinfachten Darstellung und zum leichteren Verständnis der Erfindung hier ein kreisrundes Loch angenommen. Die Erfindung ist auf dieses aber nicht beschränkt. Es ist zwar bekannt, in der Oberwand einer Verpackung eine Ausgießvorrichtung anzubringen, im Falle der vorliegenden Erfindung ist aber von einem Oberwandteilstück deshalb gesprochen, weil eine Oberwand aus mehreren Teilstücken aufgebaut sein kann und die Ausgießvorrichtung gemäß der Erfindung nur in einem ausgewählten Teilstück angebracht wird.

Die Ausgießvorrichtung ist einteilig, wobei aber ein Unterteil über ein scharnierartiges Gelenk mit einem Deckel verbunden ist. Im Unterteil befindet sich ein Loch, welches von einer Verschließkappe flüssigkeitsdicht verschlossen werden kann, wenn nämlich der Deckel, welcher diese Verschließkappe enthält, mittels des Scharniers so herumgeklappt wird, daß die Hauptebene des Deckels parallel zu der des Unterteils zu liegen kommt.

Die Flüssigkeitsdichtigkeit der Ausgießvorrichtung ergibt sich dadurch, daß die erwähnte Dichtlippe an der Verschließkappe um das gesamte Loch herum mit dem Kragen des Unterteils in Dichteingriff kommt. Hebt man also die Verschließkappe, d. h. den Deckel durch Hochziehen und Drehen um die Achse des Scharniers von dem nach außen hochstehenden Kragen des Unterteils ab, dann ist das Loch durch das Unterteil und durch das Oberwandteilstück offen, so daß Füllgut aus der Verpackung entleert werden kann. Desgleichen ist nach einer Teilentleerung die Ausgießvorrichtung umgekehrt wieder verschließbar.

Durch Spritzgießen kann man beispielsweise aus einem thermoplastischen Kunststoff eine Ausgießvorrichtung dieser vorstehend beschriebenen Art preiswert und technisch gut beherrschbar herstellen. Der durch das Loch in dem Oberwandteilstück befindliche bzw. durch dieses Loch hindurchragende Bund der Ausgießvorrichtung schützt in vorteilhafter Weise die durch das Ausstanzen des Loches in der Papierbahn offenen Schnittkanten am Rand des Loches. Wenn außerdem das Unterteil wenigstens auf der Innenfläche des Oberwandteilstückes angeschweißt ist, kann im Falle einer Flüssigkeit als Fließmittel diese nirgends in offene Schnittkanten des Verbundmaterials der Verpackung eindringen und dieses zerstören, denn die Ausgießvorrichtung bietet der Flüssigkeit nur Kunststoffoberflächen an, die für Flüssigkeiten undurchlässig sind.

Als Kunststoff zur Herstellung der Ausgießvorrichtung kann man Polyethylen hoher Dichte verwenden, welches auch den Geschmack bei Lebensmitteln nicht verändert und für Lebensmittel zulässig ist. Die üblichen aus mit Kunststoff beschichtetem Papier hergestellten Verpackungen können also einwandfrei mit der Ausgießvorrichtung versehen werden und mit Milch, Säften, Wasser, Speiseöl sowie anderen Fließmitteln gefüllt werden.

Besonders vorteilhaft ist es, wenn der außen vom Unterteil hochstehende Kragen sich unter Bildung einer Hinterschneidung nach außen erweitert und wenn die Verschließkappe einen im geschlossenen Zustand den Kragen außen umgreifenden Außenrand hat, dessen Ende unter Bildung einer Schnappwulst nach innen verdickt ausgebildet ist. Diese Ausgestaltung der Ausgießvorrichtung ermöglicht ein Festhalten der Verschließkappe am Unterteil im geschlossenen Zustand, nachdem man diese aufgedrückt hat. Thermoplastische Kunststoffe sind elastisch, so daß sich beim Schließen die verdickte Schnappwulst der Verschließkappe über den Kragen außen so hinübergedrückt werden kann, daß der Außenrand nach dem Aufdrücken festgehalten wird, denn die Schnappwulst liegt längs des Umfanges, beispielsweise ringförmig in der Hinterschneidung am Kragen. Andererseits kann diese Haltekraft, die einer Klemmkraft entspricht, zum Öffnen vom Endverbraucher leicht überwunden werden, weil wiederum der Außenrand der Verschließkappe sich leicht aufweiten und über den Kragen nach oben zum Öffnen des Loches hinweggezogen werden kann.

In Verlängerung des Bundes kann am Unterteil ein sich auf der Innenfläche des Oberwandteilstückes erstreckender Befestigungsrand angebracht sein. Dies ist ein vorteilhaftes Mittel zum Befestigen vorgefertiger Ausgießvorrichtungen an den Löchern der Verpackungen. In der Aufbringstation der Verpackungsmaschine wird beispielsweise die Ausgießvorrichtung mit ihrer Hauptebene so auf das Oberwandteilstück aufgelegt, daß beide Ebenen im wesentlichen parallel zueinander liegen. Dies erreicht man bei dem Unterteil der Ausgießvorrichtung dadurch, daß der Bund mit dem in Verlängerung dazu angebrachten Befestigungsrand durch das Loch in der Papierbahn hindurchgesteckt wird, wonach ein geeignetes Schweißwerkzeug den Befestigungsrand nietenartig verformt und auf der Innenfläche des Oberwandteilstückes anschweißt. Unter Innenfläche wird diejenige Fläche des Oberwandteilstückes verstanden, die bei der fertigen Packung später zur Innenseite derselben wird.

Es ist ferner günstig, wenn das Unterteil in einem im wesentlichen ebenen Verbindungssteg zwei im Abstand zueinander angeordnete Löcher unterschiedlichen Durchmessers enthält, von denen das größere Loch zum Ausgießen des Füllgutes nahe der Kante zwischen Ober- und Seitenwand der Verpackung angeordnet ist und vorzugsweise die dem Scharnier gegenüberliegende Gießkante des das größere Loch umgebenden Verbindungssteges über der Kante zwischen Ober- und Seitenwand liegt. Auf diese Weise hat man ein großes Ausgießloch und im Abstand dahinter ein kleineres Belüftungsloch, welches beim Ausgießen frei von Füllgut ist und das Ersetzen des entleerten Füllgutes durch einfließende Luft erlaubt. Es ist einfach, in der Hauptebene des Unterteils einen seitlich mehr oder weniger breiten Verbindungssteg auszubilden, der aber den Vorteil hat, daß er die Löcher umgibt und beide Flächen miteinander verbindet. Damit wird auf einfache Weise ein Unterteil gebildet, welches um den Kragen des jeweiligen Loches herum eine ebene Auflage bietet, die parallel zur Ebene des Oberwandteilstückes liegt und gegebenenfalls auf der äußeren Oberfläche des Oberwandteils angeschweißt werden kann. Dabei würde es allerdings genügen, das Unterteil um die Löcher herum mit dem Oberwandteilstück zu verschweißen. Gegebenenfalls kann man auch einen Steg zwischen den beiden Schweißringen vorsehen. Der Fachmann und insbesondere der Endverbraucher erkennt sofort den technischen Vorteil des ebenen Verbindungssteges, insbesondere seines das größere Loch umgebenden Teilstückes, weil dieses am ausgießseitigen Ende die Gießkante bildet, also eine Abreißhilfe des Gießstrahles schafft, ohne daß besondere Vorkehrungen oder Materialien hinzugefügt werden müßten.

Zweckmäßig ist es auch, wenn der Deckel mit einem Aufreißgriff versehen ist, dessen eines Ende an der dem Scharnier gegenüberliegenden Seite mit dem Deckel verbunden ist. Zwar ist es möglich, auf der Seite der Gießkante den Deckel mit einem Ansatz oder einer vorstehenden Greifhilfe zu versehen, sehr praktisch und für den Endverbraucher bequem ist aber die Benutzung eines Aufreißgriffes, der auf der Gießkantenseite am Außenrand des Deckels einerseits und im Bereich des Scharniers oder der dort befindlichen Verschließkappe andererseits befestigt ist. Ein solcher Aufreißgriff wird vom Benutzer sogleich erkannt, ergriffen und führt die Öffnungskräfte an die richtige Stelle, damit nämlich der verdickte Außenrand mit seiner Schnappwulst zügig und schnell über den Kragen des Unterteils hochgezogen wird. Eine solche Öffnungshilfe erleichtert die Handhabung erheblich. Dabei könnte man auch an einer Kante des Deckels oder an einer Stelle des Aufreißgriffes eine Verbindung zum Unterteil vorsehen, die mit einer Sollbruchstelle versehen ist, nämlich als Originalitätsgarantie. Man kann die Ausgießvorrichtung dann nur öffnen, wenn man diese Sollbruchstelle geöffnet hat. Der Benutzer sieht an dieser gegebenenfalls deutlich zu kennzeichnenden Stelle sofort, ob die Ausgießvorrichtung schon einmal geöffnet worden war.

Weitere Vorteile, Vorteilhafte Merkmale und Anwendungsmöglichkeiten der vorliegenden Erfindung ergeben sich aus der folgenden Beschreibung bevorzugter Ausführungsbeispiele in Verbindung mit den anliegenden Zeichnungen. Hier zeigen:
- Figur 1: perspektivisch eine quaderförmige Verpackung mit einer Ausgießvorrichtung nach einer ersten Ausführungsform,
- Figur 2: eine Draufsicht auf eine Ausgießvorrichtung nach einer zweiten Ausführungsform,
- Figur 3: eine Schnittansicht durch die Ausführungsform der Figur 2 entlang der Linie A-A,
- Figur 3a: eine Einzelheit der Figur 3 links,
- Figur 3b: eine Einzelheit, abgeschnitten und vergrößert der Figur 3 rechts, jeweils gemäß dem gestrichelten Kreis,
- Figur 4: abgebrochen und vergrößert eine Querschnittsansicht durch das Oberwandteilstück mit bereits aufgebrachter Ausgießvorrichtung, die aber noch nicht befestigt ist,
- Figur 5: einen Heizbacken in Gestalt eines Nietwerkzeuges,
- Figur 5a: die gleiche Darstellung wie Figur 5, jedoch mit einem Heizbacken anderer Maße für das Loch mit Verschluß mit kleinerem Durchmesser,
- Figur 6: den Eingriff der Werkzeuge mit der Ausgießvorrichtung und dem Oberwandteilstück beim Verschweißen bzw. Befestigen und
- Figur 7: schematisch und abgebrochen die Seitenansicht einer Verpackungsmaschine, welcher die Einrichtungen zur Befestigung der Ausgießvorrichtung vorgeschaltet sind.

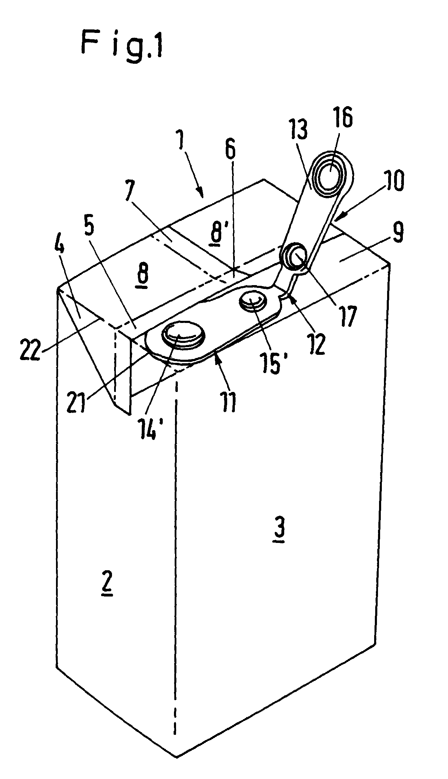

In Figur 1 sieht man eine quaderförmige Flüssigkeitspackung mit einer allgemein mit 1 bezeichneten Oberwand, mit einer schmalen Seitenwand 2 und einer breiten Seitenwand 3, wobei die anderen Seitenwände und der Boden nicht gezeigt sind. Im Bereich der Oberwand 1 sind dreieckförmige Lappen 4 durch die Quersiegelnaht 5 gebildet, und man erkennt auch die Kreuzstelle 6, in der die Quersiegelnaht 5 von der Längssiegelnaht 7 gekreuzt wird. Dadurch gibt es auf beiden Seiten der Längssiegelnaht 7 oben im Bereich der Oberwand 1 zwei sogenannte obere Teilstücke 8, 8' und ein unteres Oberwandteilstück 9.

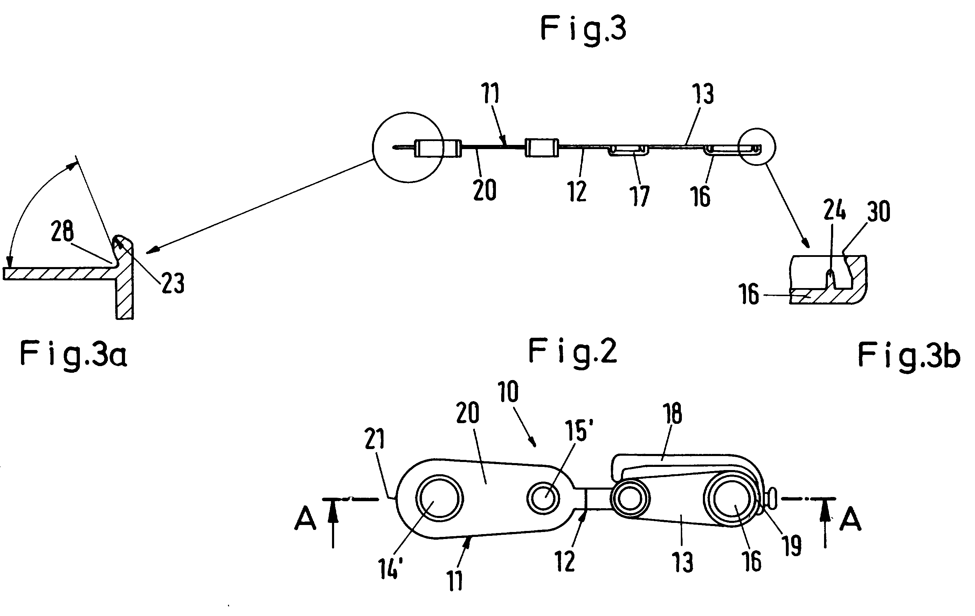

In diesem unteren Oberwandteilstück 9 ist die allgemein mit 10 bezeichnete Ausgießvorrichtung angebracht. Eine andere Ausführungsform einer solchen ist in der Draufsicht auch in Figur 2 zu sehen. Das Verbundmaterial, aus welchem die Verpackung nach Figur 1 hergestellt ist, ist mit Kunststoff beschichteter Karton, dessen Innenseite zusätzlich mit einer Aluminiumfolie beschichtet ist.

Die Ausgießvorrichtung 10 besteht bei der hier dargestellten Ausführungsform aus einem Unterteil 11 und einem mittels eines Scharnieres 12 mit diesem verbundenen Deckel 13.

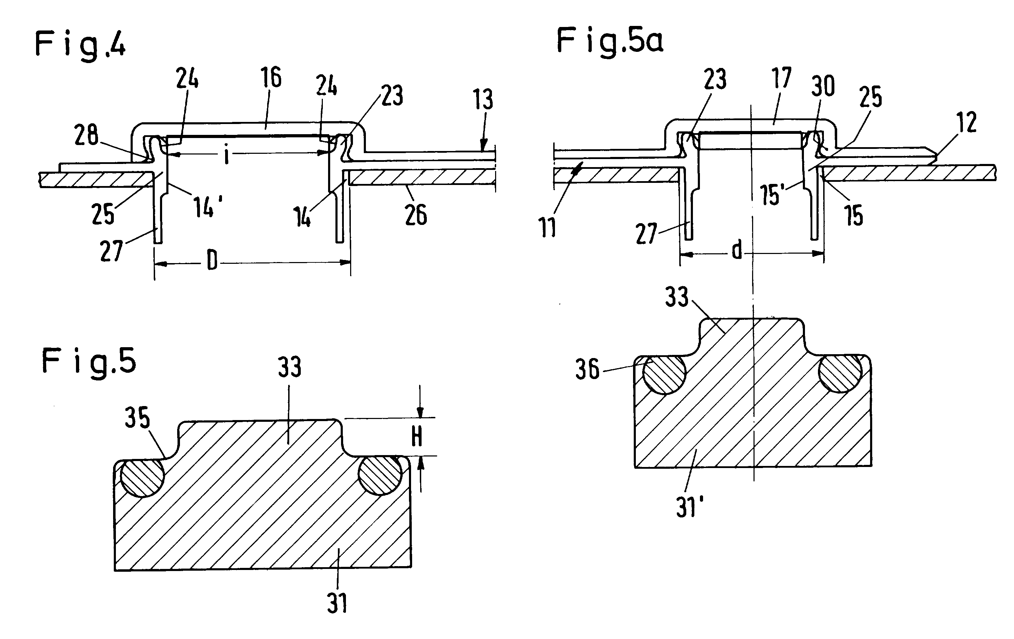

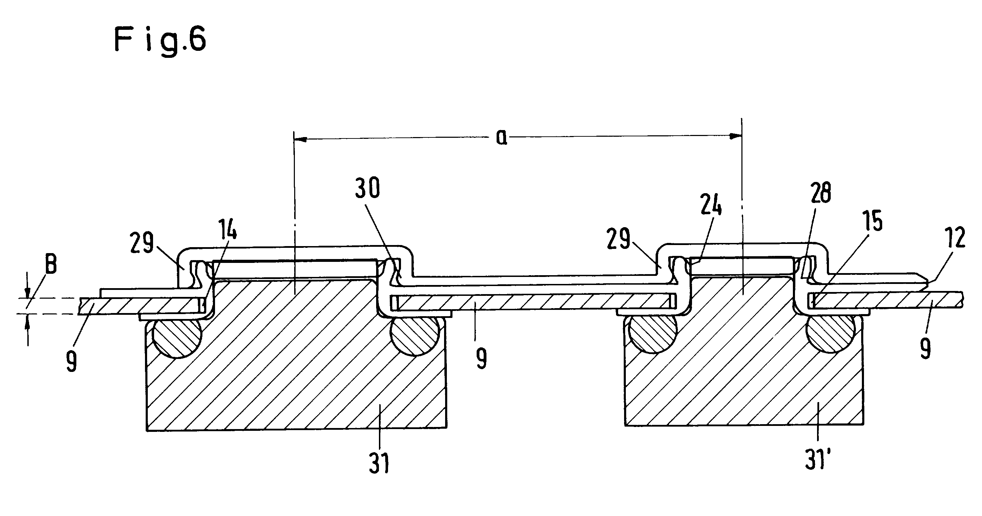

Wie man auch in den Figuren 4 und 6 erkennt, sind in dem Oberwandteilstück 9 zwei Löcher 14 und 15 unterschiedlichen Durchmessers eingestanzt. Das größere Loch 14 hat den Durchmesser D, während das kleinere Loch 15 den Durchmesser d hat. In entsprechender Weise enthält auch das Unterteil 11 zwei Löcher 14' und 15', die von den beiden Verschließkappen 16 und 17 des Deckels 13 verschlossen werden können.

Im Vergleich zu der Ausführungsform der Verschließkappe 10 nach Figur 1 hat die nach den Figuren 2 und 3 zusätzlich an der Seite des Deckels einen Aufreißgriff 18, dessen eines, in Figur 2 links dargestellten Ende im Bereich der kleinen Verschließkappe 17 angeheftet ist, während das dieser Seite gegenüberliegende Ende des Aufreißgriffes 18 nahe der großen Verschließkappe 16 an der Stelle 19 angebracht ist.

Das Unterteil 12 hat bei den hier gezeigten Ausführungsformen mit den zwei Löchern 14', 15' einen Verbindungssteg 20, welcher beide Löcher 14' und 15' umgibt und dessen dem Scharnier gegenüberliegende Kante die Gießkante 21 ist, die gemäß Figur 1 über der Kante 22 zwischen der Oberwand 8, 9 und der Seitenwand 2 liegt. In der Querschnittsdarstellung der Figuren 4 und 6 umgibt jeweils ein Kragen 23 das Loch 14' bzw. 15' außen. Die jeweilige Verschließkappe 16 bzw. 17 weist eine mit diesem Kragen 23 in Dichteingriff bringbare Dichtlippe 24 auf. Auf der dem Kragen 23 gegenüberliegenden Innenseite des Unterteils 11 ist ein Bund 25 angeformt. Dieser ragt in das jeweilige Loch 14 bzw. 15 im Oberwandteilstück 9 zur Innenseite der Verpackung hin. Das Unterteil 11 wird durch die später beschriebenen Schweißwerkzeuge entweder nur um die Löcher 14 und 15 oder auch längs eines Verbindungssteges zwischen den Löchern 14 und 15 am Oberwandteilstück 9 angeschweißt. Dies ist die Befestigung von außen. Auf der Innenfläche 26 des Oberwandteilstückes 9 wird ein Befestigungsrand 27 angeschweißt, nachdem er in die Ebene parallel zu der des Oberwandteilstückes 9 herumgebogen ist, wie in Figur 6 dargestellt ist.

Man erkennt ferner besonders aus den Figuren 4 und 6, daß der außen vom Unterteil 11 hochstehende Kragen 23 sich unter Bildung einer Hinterschneidung 28 nach außen erweitert. Die Verschließkappe 16 bzw. 17 hat einen Außenrand 29, welcher den Kragen 23 im geschlossenen Zustand der Ausgießvorrichtung 10 außen umgreift. Das Ende des Außenrandes 29 ist nach innen verdickt ausgebildet, wodurch eine Schnappwulst 30 entsteht. Diese kann beim Zudrücken in die durch den Winkel der Figur 3a dargestellte Hinterschneidung 28 neben dem Kragen 23 gelangen.

In den Figuren 5, 5a und 6 sind die Heizbacken 31, 31' in Form eines Nietwerkzeuges dargestellt. Diese sind auf der dem Verpackungsinneren zugewandten Innenfläche 26 der inFigur 7 gezeigten Bahn 32 bewegbar. In der Mitte hat jeder Heizbacken 31 bzw. 31' einen mittigen Vorsprung 33 mit einem Durchmesser, der etwa dem Innendurchmesser (i) der Dichtlippe 24 an der Verschließklappe 16 bzw. 17 entspricht. Die Höhe H des Vorsprunges 33 ist etwas größer als die Dicke B des Materials des Oberwandteilstückes 9, gegebenenfalls doppelt so dick, damit sich die Nietfunktion des Heizbacken 31 bzw. 31' ergibt. In der zurückgesetzten Schulterfläche 35 des Heizbackens 31 bzw. 31' ist eine Induktionsspule 36 angeordnet, die in den Figuren 5, 5a und 6 durch abgeflachte schwarze Vollkreise dargestellt sind. Diese Induktionsspulen 36 umgeben den Vorsprung 33 kreisförmig.

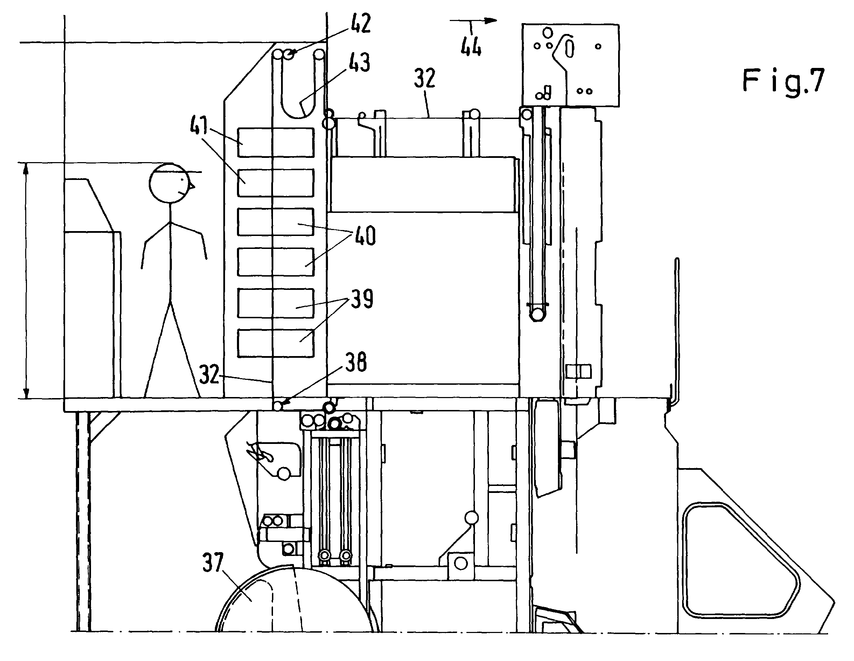

In der in Figur 7 gezeigten Maschine wird eine Bahn 32 von Verbundmaterial von einer Vorratsrolle 37 nach oben abgezogen und über eine Zugvorrichtung 38 intermittierend bewegt. In zwei Stanzstationen 39 wird die Bahn gleichzeitig so gestanzt, daß die zwei Löcher 14 und 15 entstehen. Im nächsten Schritt, nachdem die Bahn 32 weiter nach oben bewegt worden ist, sind die beiden Löcherpaare in den Stationen 40 angekommen, wo jeweils eine Ausgießvorrichtung 10 an die Löcher herangebracht wird, wie in Figur 4 gezeigt ist. Es handelt sich übrigens bei der Ausführungsform der Figur 4 um eine geringfügige Abwandlung gegenüber der der Figur 3, wo nämlich keine Befestigungsränder 27 angesetzt sind.

Die in der Anbringstation 40 angelegten Ausgießvorrichtungen 10 werden dann in der Station 41 nach dem nächsten Förderschritt der Bahn 32 in einer Weise angeschweißt, wie in Figur 6 dargestellt ist. Bei dieser Ausführungsform mit dem Befestigungsrand 27 sorgen nämlich die Heizbacken 31 und 31' dafür, daß die Befestigungsränder 27 in die in Figur 6 gezeigte horizontale Lage umgelegt und dann durch Einschalten der Induktionsspulen 36 an der Unterseite 26 des Oberwandteilstückes 9 angeschweißt werden.

Ein Servoantrieb 42 mit Pufferschleife 43 sorgt dann für die weitere Bewegung der Bahn 32 in Richtung des Pfeiles 44 nach rechts in Figur 7, wo der Eingang in die herkömmliche Verpakkungsmaschine erfolgt, d.h. der Schlauch gebildet wird und danach die Packung bis zur Fertigstellung erzeugt wird.

## Patentansprüche

1. Verfahren zur Herstellung einer Verpackung für Fließmittel mit wenigstens einem im wesentlichen ebenen Oberwandteilstück (9) aus mit Kunststoff beschichtetem Trägermaterial, z. B. Karton, in welchem eine Ausgießvorrichtung (10) angebracht ist, die ein wenigstens ein Loch (14', 15') enthaltendes Unterteil (11) und einen scharnierartig (12) mit diesem verbundenen, wenigstens eine Verschließkappe (16, 17) enthaltenden Deckel (13) aufweist, **dadurch gekennzeichnet**, daß eine Bahn (32) aus Verbundmaterial, das gegebenenfalls für die Innenseite der Verpackung eine Aluminumbeschichtung enthält, nach dem Rillen zur Bildung des wenigstens einen Loches (14, 15) im Oberwandteilstück (9) gestanzt wird, dann eine Ausgießvorrichtung (10) aus thermoplastischem Kunststoff mit außen vom Unterteil (11) hochstehendem Kragen (23) an dem ausgestanzten Loch (14, 15) angelegt und in der nächsten Stufe (41) angeschweißt wird, wonach die Bahn (32) zum Schlauch geformt, gefüllt und verschweißt wird.

2. Verfahren nach Anspruch 1, **dadurch gekennzeichnet,** daß der Deckel (13, 16) mit dem Unterteil (11) scharnierartig verbunden ist.

3. Verfahren nach Anspruch 1 oder 2, **dadurch gekennzeichnet,** daß bei mit Aluminium beschichtetem Verbundmaterial der Bahn (32) diese mittels Induktion erwärmt und mit der Ausgießvorrichtung (10) verbunden wird.

4. Werkzeug zur Durchführung des Verfahrens nach Anspruch 3, insbesondere zum Befestigen der Ausgießvorrichtung (10) an dem Oberwandteilstück (9), mit relativ zueinander bewegbaren Heiz- (31, 31') und Gegenbacken, **dadurch gekennzeichnet,** daß ein das Loch (14, 15) in dem Oberwandteilstück (9) übergreifender Heizbacken (31, 31') auf der späteren Innenseite der Bahn (32) bewegbar vorgesehen und mit einem mittigen Vorsprung (33) mit einem Durchmesser versehen ist, der etwa dem Innendurchmesser (i) der Dichtlippe (24) an der Verschließkappe (16, 17) entspricht, wobei der Innendurchmesser (i) der Dichtlippe (24) etwa gleich dem Innendurchmesser des Loches (14', 15') in dem Verbindungssteg (20) der Ausgießvorrichtung (10) ist, und der Vorsprung (33) eine Höhe (H) hat, die etwas größer ist als die Dicke (B) des Materials des Oberwandteilstückes (9), und daß in der zurückgesetzten Schulterfläche (35) des Heizbackens (31, 31') eine den Vorsprung (33) umgebende Induktionsheizspule (36) angeordnet ist.

## Claims

1. Method for manufacturing a pack for flowable media having at least one substantially flat top wall portion (9) of plastics-coated carrier material, e.g. cardboard, in which a pouring device (10) is arranged which has a bottom part (11) containing at least one hole (14', 15') and a cover (13) connected thereto in hinge-like manner (12) and containing at least one closure cap (16, 17), characterized in that a web (32) of composite material which may contain an aluminium coating for the inside of the pack is stamped in the top wall portion (9), after grooving, to form the at least one hole (14, 15), and a pouring device (10) of thermoplastics material with a collar (23) projecting out of the bottom part (11) is then placed on the stamped hole (14, 15) and is welded on in the next stage (41), whereupon the web (32) is shaped into a tube, filled and welded.

2. A method according to claim 1, characterized in that the cover (13, 16) is connected in hinge-like manner to the bottom part (11).

3. A method according to claim 1 or 2, characterized in that when the web (32) is made of aluminium-coated composite material, this web is heated by induction and is joined to the pouring device (10).

4. A tool for carrying out the method according to claim 3, in particular for fixing the pouring device (10) to the top wall portion (9), with heating jaws and companion jaws (31, 31') which can be moved relative to each other, characterized in that a heating jaw (31, 31') which engages over the hole (14, 15) in the top wall portion (9) is movably provided on the subsequent inside of the web (32) and is provided with a central projection (33) which in diameter is approximately equal to the internal diameter (i) of the sealing lip (24) on the closure cap (16, 17), the internal diameter (i) of the sealing lip (24) being almost equal to the internal diameter of the hole (14', 15') in the connecting web (20) of the pouring device (10), and the projection (33) is of a height (H) which is somewhat greater than the thickness (B) of the material of the top wall portion (9), and that an induction-heating coil surrounding the projection (33) is arranged in the offset shoulder face (35) of the heating jaw (31, 31').

## Revendications

1. Procédé de fabrication d'un emballage pour produits fluides, comportant au moins un panneau partiel de paroi supérieure (9), essentiellement plan, constitué d'un matériau support enduit de plastique, par exemple un carton, dans lequel est rapporté un dispositif verseur (10), qui comporte une partie inférieure (11) contenant au moins un trou (14', 15'), et un couvercle (13), relié à cette partie inférieure à la manière d'une charnière (12) et contenant au moins un capuchon de fermeture (16, 17), caractérisé en ce qu'une bande (32) en le matériau composite, qui contient éventuellement un revêtement d'aluminium pour la face intérieure de l'emballage, est découpée après le rainurage destiné à former au moins un trou (14, 15) dans le panneau partiel de paroi supérieure (9), puis un dispositif verseur (10), en un matériau thermoplastique, comportant une collerette (23) dépassant vers l'extérieur à partir de la partie inférieure (11), est rapporté au trou découpé (14, 15), et est rapporté par soudage au cours de l'étape suivante (41), ce après quoi la bande (32) est façonnée pour donner un boyau, remplie et soudée.

2. Procédé selon la revendication 1, caractérisé en ce que le couvercle (13, 16) est assemblé à la partie inférieure (11) à la manière d'une charnière.

3. Procédé selon la revendication 1 ou 2, caractérisé en ce que, dans le cas du matériau composite revêtu d'aluminium, la bande (32) est chauffée par induction à l'aide de ce dernier, et est reliée au dispositif verseur (10).

4. Outillage pour mettre en oeuvre le procédé selon la revendication 3, en particulier pour fixer le dispositif verseur (10) au panneau partiel de paroi supérieure (9), comportant des mâchoires chauffantes (31, 31') et des contre-mâchoires pouvant se déplacer l'une par rapport à l'autre, caractérisé en ce qu'on prévoit une mâchoire chauffante (31, 31'), qui recouvre le trou (14, 15) aménagé dans le panneau partiel de paroi supérieure (9), et mobile sur la face de la bande (32) qui va ultérieurement se trouver à l'intérieur, cette mâchoire étant pourvue d'une saillie centrale (33), dont le diamètre correspond approximativement au diamètre intérieur (i) de la lèvre d'étanchéité (24) contre le capuchon de fermeture (16, 17), le diamètre intérieur (i) de la lèvre d'étanchéité (24) étant approximativement égal au diamètre intérieur du trou (14', 15') aménagé dans la traverse de liaison (20) du dispositif verseur (10), la saillie (33) ayant une hauteur (H) qui est un peu plus grande que l'épaisseur (B) du matériau du panneau partiel de paroi supérieure (9), et en ce qu'une bobine de chauffage par induction (36), qui entoure la saillie (33), est disposée dans la surface en épaulement (35), située en retrait, de la mâchoire chauffante (31, 31').
